Europäisches Patentamt

European Patent Office

Office européen des brevets

(19)

(11) Publication number: **0 441 735 A1**

## (12) EUROPEAN PATENT APPLICATION

(21) Application number: **91500010.3**

(22) Date of filing: **28.01.91**

(51) Int. Cl.⁵: **B65G 1/137, B66F 9/07**

(30) Priority: **08.02.90 ES 9000365**

(43) Date of publication of application:
**14.08.91 Bulletin 91/33**

(84) Designated Contracting States:
**AT BE CH DE DK FR GB GR IT LI NL SE**

(71) Applicant: **Balzola Elorza, Martin**
**3, calle Urquijo**
**E-48930 Las Arenas-Getxo (Vizcaya) (ES)**

(72) Inventor: **Balzola Elorza, Martin**
**3, calle Urquijo**
**E-48930 Las Arenas-Getxo (Vizcaya) (ES)**

(74) Representative: **Alonso Langle, Emilio**
**Naciones, 12, 3 B**
**E-28006 Madrid (ES)**

(54) Automatic positioner for stores.

(57)    The positioner is prepared for all kind of stores with pieces suitable to be carried with pallets (containers, trays, boxes, pieces, etc) with horizontal forks (6), being the positioner prepared to load, to unload, to select, to store, to pull out, to prepare orders, etc, of any kind of the before mentioned products. The positioner has a structure with two vertical masts (1) with a bolster (3) moving vertically between them, with an inserted slider (5) moving along this bolster (3), a longitudinal frame (4) on which moves another slider (7) carrying a vertical column (8) with its free end provided with an air hole or clam (9) to carry out the transference of these products, being all the operations monitored by computer.

EP 0 441 735 A1

FIG.-1

# AUTOMATIC POSITIONER FOR STORES

## PURPOSE OF THE INVENTION

This invention is related to the scope of the stores where pieces, boxes, containers and, in general, all kind of products are suitable to be handled with horizontal forks, that is to say, products or pieces suitable to be handled with a pallet to be unloaded, classified and later preparared for the orders.

The purpose of the invention is an automatic manipulator which function is to carry out the positioning to order these products into their corresponding shelves or storing places at their arrival, pulling them out when necessary to form a particular order.

This positioner carries out all the operations related to loading, unloading, classification and place changing of containers, trays, pieces, etc., with or without any manual manipulation, by means of a simple order received from a computer, whenever these products, individually or by groups, are mantained in a known preselected and fixed position in the space.

## BACKGROUNDS OF THE INVENTION

Since the stores equipped with pallets may be of big or small size, manipulating big or small pieces, containers or boxes, that may be similar or different, using or not shelves and supporting structures, a series of factors participates in their classification. These factor are those related to the unloading and the correspondent transport, storing, selection and pulling out of containers to form the orders based on client names or on destines of complete or part containers, pallets or boxes.

All these operations are, no doubt, very automated by the use of barrows, transelevators, different kinds of carriers, order-collectors, etc. Briefly, theres are a lot of devices and mechanisms of automatic actioning to carry out a series of usual operations in stores.

However, there isn't any manipulator or device carrying out by itself, without the complement of other devices of mechanisms, all the above mentioned functions requiered at stores. That is to say, there isn't any manipulator carrying out automatically the place interchanging of containers, as well as the selection of pieces from a container transfering them to other places or containers, etc.

## DESCRIPTION OF THE INVENTION

The manipulator of this invention solves all these problems in a complete satisfatory way, based on a simple by very useful structure, with a totally new system for the transference of products, using a double fork and an erecting crane with a rotatory mast or a transelevator, in such a way that in any one of these cases the manipulator may carries out the above mentioned functions in a simple and useful way.

The proposed manipulator is based on a structure including two separated rotatory vertical masts hanged from an erecting crane slider and arranged perpendicularly to the forks, these supporting the pallet or container with the pieces or products to be manipulated, in such a way, that between both mentioned masts there is a space allowing the passage of both the containers and the corresponding transference element of pieces, which is constituted by an horizontal frame arranged parallel to the forks, which is projected form the external border of one of the containers to the opposed border of the container located at the opposed fork.

A slider slides longitudinally on the mentioned frame provided with a vertical rigid or telescopic column, with the same depth as the container, this column including at its free end an air hole or clamp in order to extract the pieces or boxes of the container.

In the same way, the mentioned frame moves laterally along an horizontal bolster which moves vertically guided betwwen both masts.

Based on these movements : ascendent-descendent, transverse and longitudinal, the lower end of the vertical column provided with the air hole or clamp reaches any point inside the container, going afterwards out above its upper border and descending again to any other point of the following container allowing in this way the transference of pieces from one container to another.

In the same way and as a consecuence of these three movements, it is possible to carry out a storing or a classification of pieces, etc.

As a variant, the same above described positioner incorporates a double retractable forks instead of the conventional forks, and based on a transelevator instead of the classic erecting crane of the above described positioner.

So, the objective of the positioner of this invention is to carry out the necessary operations to order all the products at a store into their corresponding shelves at their arrival, pulling them out later to form the orders.

Since the positioner may handle containers, boxes, independent pieces, bags, and others, in all the cases it will be ordered by an operator through a computer with the appropiate orders, in such a way that the positioner itself will act carrying out the necessary operations.

## DESCRIPTION OF THE DRAWINGS

In order to complete this description and to help to a better understanding of the invention, attached, and as an intergrant part of it, there is a number of drawings to illustrate it in a non-limiting way, representing :

Fig. 1 shows a perspective view of the preferred realization of the positioner of the invention based on a system for transferance of pieces constituted by a double fork and an erecting crane with a rotatory mast.

Fig. 2 shows a variant of realization, where the system for the transference of pieces is constituted by a transelevator with double retractable forks but with the same support support, general structure and basic characteristics as the positioner represented in the previous drawing.

## PREFERRED REALIZATION OF THE INVENTION

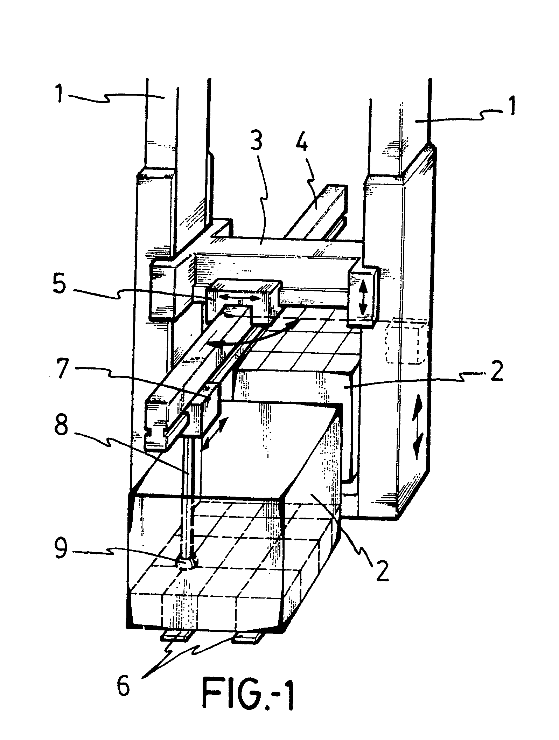

In view of the drawings, and particularly of Fig. 1, the positioner of the invention is based on a strucutre including two masts (1) arranged vertically and separated to allow the passage of containers (2) containing a series of pieces, bags of boxes to be transfered from one to other.

Between the mentioned masts (1) there is an horizontal bolster (3) ascending and descending, proyecting from it an horizontal and longiotudinal frame (4) that rotates about a vertical axle, that is, in the horizontal plan, and, at the same time, slides in a transverse way. The sliding is a consecuence of the mounting of the frame on the bolster (3) which is done on a slider (5), that slides in a transverse way.

The ends of the mentioned frame (4) have a length enough to reach the opposed borders of the containers (2) when they are on the corresponding forks (6), as it is shown in Fig. 1.

The frame (4) includes a slider (7) sliding longitudinally along the said frame. The slide carries a vertical column (8) with its lower end carrying an air hole or clamp (9) to pull out the pieces or boxes from inside the containers (2).

The three described movements -the transverse movement of the slider (5) and consecuently of the frame (4), the longitudinal movement of the slider (7) and consecuently of the column (8) and the asdcending and descending movement of the same bolster (3)- allow the air hole or the clamp (9) to pull out a piece or a box from one of the containers (2) to transfer it to the following container.

In this preferred realization, the frame (4) is provided -in its two halfs and at the point of clamping of the slider (5)- with an articulation with a vertical roratory axle to allow its folding on the frontal plan of the masts (1) avoiding in this way the collision with other containers introducing or pulling out the load.

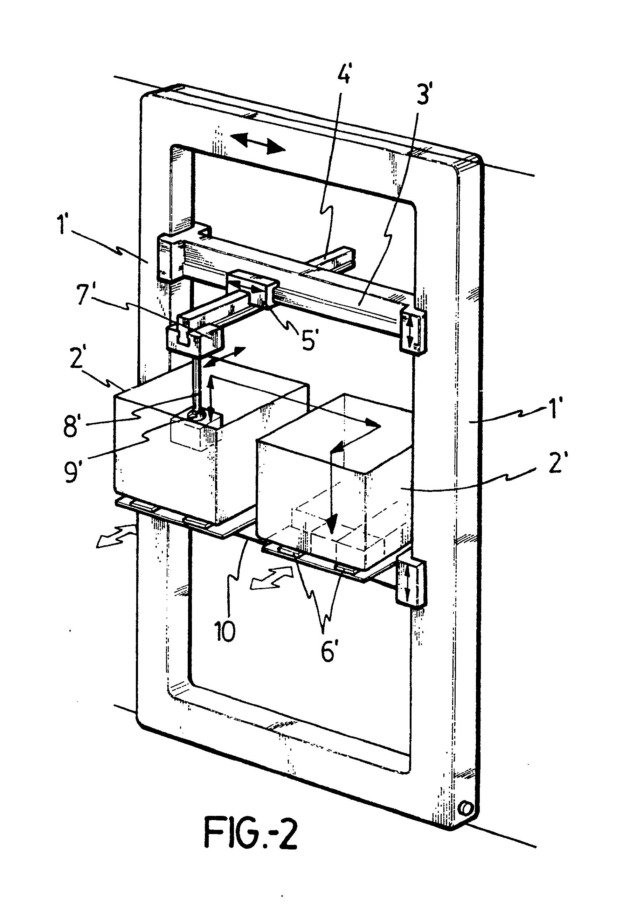

According to the variant of the realization, the positioner is able to be also constituted by a pair of vertical masts (1') and in between there there is also mounted a bolster (3') that slides ascending and descending provided with a longitudinal and horizontal frame (4') with the insertion of a slider (5') in a transverse way, it means, along the bolster (3'), including this longitudinal frame (4') a slider (7') with a column (8') with its lower end provided with an air hole or clamp (9') to pull out a piece or box from the correspondent cotainer (2') to transfer it to another container (2'), as it is shown in Fig. 2.

In this case, the positioner is based in a double fork (6') and in a transelevator (10) arranged transversally between the masts (1') that slides ascending and descending, as it is shown in Fig. 2, being this forks (6'), as it has been said previously, double and retractable to be able to contain the containers (2') in which it has to be transferred the pieces or boxes form one to another.

In this variant of realization -Fig. 2, the vertical movements of the forks (6') may be independent of common.

The described positioner, in its two variants, may offer variable speeds and accelerations, using accelerating and decceleration ramps, in such a way, that the maximum speed achieved are that ones allowed by the accelerating and deccelerating ramps and the corresponding runs, avoinding in this way the possibility of collision at high speed in the pulling out and depositing operations of palletssupports of containers (2) or (2').

The actioning will be based on continuous motors with speed control, and even with additional motors for a fine adjusting of the stops, whilst the runs will be monitored by "encoders" and auto-flexion photocells, and fixed signals to start again from the position data stored in memory to define the stop point, visualizating these runs and, consecuently, carrying out the control precisely by means of television monitors mounted on the positioners.

All the operations are monitored through the corresponding computer that stores and processes all the data related to the date, size, types and positions in the space of the containers, boxes, bags, etc., and also the pulling out operations, origin, destine, distribution, classification, cubature algorithms, etc.

According to the purpose of the invention, it is possible to handle in stores all kind of products (containers, boxes, pieces, trays, etc) only by an operator that gives the corresponding orders, making the positioner able to provide with the desired pieces, boxes or conatiners, and once pulled out to transfer ot to classify them.

It is not considered as necessary to make a broader description of this invention to understood its scote and advantages.

The materials, shape, size- and arrangement of the elements are able to be varied whenever there is no alteration in the essentiality of the invention.

The terms this description has been written must be considered in a broad and non.-limiting way.

## Claims

1. An automatic positioner for stores able to classify products in shelves, boxes, containers and areas prepared at their arrival, and to pull them out later to form a specific order, characterized in that the structure is based in two masts (1) vertically arranged and separated by a distance longer than that of the containers (2) whose pieces or boxes must be transferred from one to another ; with the particularity that between the said two masts (1) there is mounted a bolster (3) that slides ascending and descending which also supports a longitudinal frame (4) mounted on the slider (5) moving along the bolster (3) ; this longitudinal frame (4) is provided with a slider (7) that moves longitudinally carrying a vertical column (8) with its end provided with an air hole or clamp (9) to pull out the corresponding pieces or boxes destined to be transferred from one container to another (2) ; with the particularity that these containers (2) are arranged on their correspondent forks (6).

2. An automatic positioner for stores as claimed in claim 1, characterized in that the longitudinal frame (4) and the transversal frame (3) have a length enough to reach the external and opposed borders of two adjacent containers (2) arranged on the forks (6).

3. An automatic positioner for stores as claimed in claim 1, characterized in that the length of the vertical column (8) is enough to allow its lower end to reach the bottom of the corresponding container.

4. An automatic positioner for stores as claimed in claim 1, characterized in that the longitudinal frame (4) is mounted with a rotatory character, according to the horizontal plan in respect with the bolster (3).

FIG.-1

FIG.-2

European Patent
Office

**EUROPEAN SEARCH REPORT**

Application Number

| | DOCUMENTS CONSIDERED TO BE RELEVANT | | EP 91500010.3 | |
|---|---|---|---|---|
| Category | Citation of document with indication, where appropriate, of relevant passages | Relevant to claim | CLASSIFICATION OF THE APPLICATION (Int. Cl.5) | |
| A | DE - A - 1 456 525 (RUDOLF GEISEL) * Totality * -- | 1 | B 65 G 1/137 B 66 F 9/07 | |
| A | DE - A1 - 3 417 736 (MÖLLERS MASCHINENFABRIK GMBH) * Abstract; fig. 1 * -- | 1 | | |
| A | DE - A1 - 2 544 191 (AB BYGG-OCH TRANSPORTEKONOMI (BT)) * Fig. 1,2 * ---- | 1 | | |
| | | | **TECHNICAL FIELDS SEARCHED (Int. Cl.5)** | |
| | | | B 65 G B 66 F | |
| | The present search report has been drawn up for all claims | | | |
| | Place of search VIENNA | Date of completion of the search 28-03-1991 | Examiner PISSENBERGER | |

EPO FORM 1503 03.82 (P0401)